# EUROPEAN PATENT APPLICATION

(11) **EP 2 944 524 A1**
(43) Date of publication of application: **18.11.2015**
(21) Application number: 15152770.2
(22) Date of filing: 28.01.2015
(51) Int. Cl.: B60T 7/06, G05G 1/30, G05G 1/40

(54) **Brake pedal and vehicle**

(30) Priority: 15.05.2014 CN 201420249853 U
(71) Applicant: Beiqi Foton Motor Co., Ltd., Beijing 102206 (CN)
(72) Inventor: Jin, Dawei, Changping District (CN); Yang, Yaying, Changping District (CN)
(74) Representative: Grünecker Patent- und Rechtsanwälte PartG mbB

(57) **Abstract**

The present invention relates to a brake pedal and a vehicle, where the brake pedal includes a fixed support (1), a pedal upper arm (2) hinged on the fixed support, and a pedal lower arm (3) mounted on the pedal upper arm, and the pedal lower arm has a pedal portion and is fixed on the pedal upper arm by using a fastener (4), where at least three mounting holes (5) arc spaced along an up-and-down direction on the pedal upper arm, and a connecting hole (6) of the pedal lower arm and one mounting hole among the mounting holes are aligned, and connected and fixed by using the fastener. The present invention not only can improve the comfort of operations for human bodies in different percentages, but also is applicable to different vehicle models, and can improve the universality of components.

## Description

### BACKGROUND

### Technical Field

The present invention relates to a vehicle brake operating mechanism, and in particular, to a brake pedal. In addition, the present invention further relates to a vehicle.

### Related Art

A braking system in a vehicle prevents rotation or a rotating trend of a wheel by using mutual friction between a non-rotating element connected to a vehicle body (a vehicle frame) and a rotating element connected to the wheel (or a drive shaft). The braking of the vehicle is directly implemented by using a brake pedal of a braking and driving mechanism.

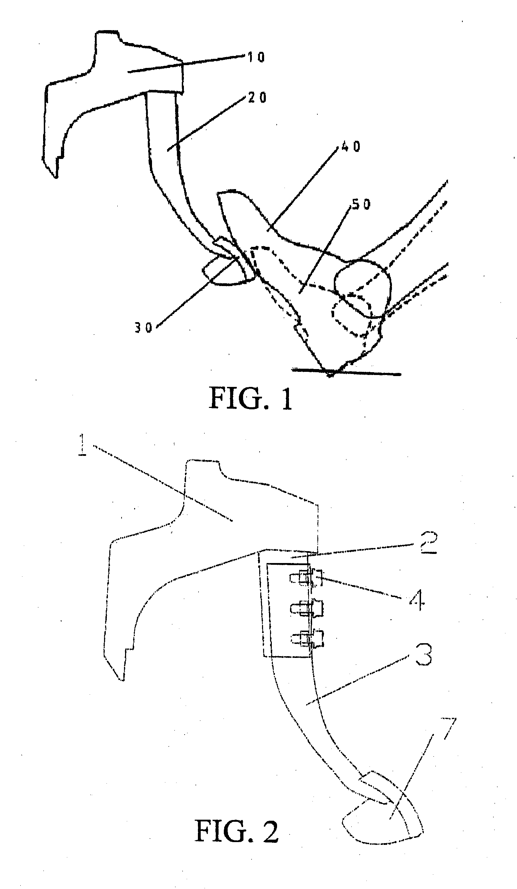

At present, an arrangement height of a brake pedal is generally designed according to that of 95% of male bodies. As shown in FIG. 1, the brake pedal includes a fixed support 10, an arm support 20 fixed on the fixed support 10 and a brake pedal 30 disposed on the arm support 20. However, a height of a surface of the brake pedal in such a structure is nonadjustable, and an arrangement structure has the following defects: uncomfortable operations for 50% of male bodies (a position 40 shown by a solid line in FIG. 1) and 5% of female bodies (a position 50 shown by a dotted line in FIG. 1); and low universality of components, for example, when a brake pedal is applied to different vehicle models, due to a change of an accelerator heel point (AHP) (a heel point, namely, a landing point of a heel of a human body) of a human body, the brake pedal changes in an overall vehicle coordinate system, and costs of a vehicle body increase.

Therefore, it is necessary to provide a brake pedal that improves the comfort of operations and the universality of the components to solve a problem in the prior art.

### SUMMARY

An objective of the present invention is to provide a brake pedal that can improve the comfort of operations and the universality of components.

In order to achieve the foregoing objective, the present invention provides a brake pedal, where the brake pedal includes a fixed support, a pedal upper arm hinged on the fixed support, and a pedal lower arm mounted on the pedal upper arm, and the pedal lower arm has a pedal portion and is fixed on the pedal upper arm by using a fastener, where multiple mounting holes are spaced along an up-and-down direction on the pedal upper arm, and a connecting hole of the pedal lower arm and one mounting hole among the mounting holes are aligned, and connected and fixed by using the fastener.

Preferably, the multiple mounting holes are spaced along the up-and-down direction on the pedal upper arm, and the connecting hole of the pedal lower arm and one mounting hole among the mounting holes are aligned, and connected and fixed by using the fastener.

Preferably, the fastener includes a bolt.

Preferably, a nut is fixed on a position, corresponding to each of the mounting holes, of the pedal lower arm, so as to threadedly cooperate with the bolt.

Further, preferably, the pedal portion is a pedal disposed at a lower end of the pedal lower arm.

Preferably, the pedal lower arm has a groove-shaped cross section, and the pedal lower arm is sleeved on the pedal upper arm by using a groove on the pedal lower arm, so that the pedal lower arm and the pedal upper arm are connected and fixed by using the fastener.

In addition, the present invention further provides a vehicle, where the vehicle includes the brake pedal described above, the fixed support is fixed to a front portion of the vehicle, and the pedal upper arm is connected to a drive member of a braking system.

By means of the brake pedal described above, that is, by adjusting a position of a connecting hole of a pedal lower arm and a position of a mounting hole of a pedal upper arm, not only can the comfort of operations for human bodies in different percentages be improved, for example, the comfort of operations for 95% of male bodies, 50% of male bodies, and 5% of female bodies can be satisfied, but also the brake pedal is applicable to different vehicle models, that is, the universality of components can be improved.

### BRIEF DESCRIPTION OF THE DRAWINGS

FIG. 1 is a structural diagram of a brake pedal in the prior art of the present invention;
FIG. 2 is a structural diagram of a brake pedal according to a specific implementation manner of the present invention;
FIG. 3 is a structural diagram of a pedal upper arm according to a specific implementation manner of the present invention;
FIG. 4 is a structural diagram of a pedal lower arm according to a specific implementation manner of the present invention;
FIG. 5 is a state diagram showing that a brake pedal is used by 95% of male bodies according to a specific implementation manner of the present invention;
FIG. 6 is a state diagram showing that a brake pedal is used by 5% of female bodies according to a specific implementation manner of the present invention; and
FIG. 7 is a state diagram showing that a brake pedal is applied to a different vehicle model according to a specific implementation manner of the present invention.

Description of reference numerals of the present invention

| | | | |
|---|---|---|---|
| 1 | fixed support | 2 | pedal upper arm |
| 3 | pedal lower arm | 4 | fastener |
| 5 | mounting hole | 6 | connecting hole |
| 7 | pedal | | |

### DETAILED DESCRIPTION

Specific implementation manners of the present invention are described in detail below with reference to the accompanying drawings. It should be understood that the specific implementation manners described herein are only intended to describe and explain the present invention, and the protection scope of the present invention is not limited to the specific implementation manners described below.

According to an aspect of the present invention, a brake pedal is provided, where the brake pedal includes a fixed support 1, a pedal upper arm 2 hinged on the fixed support 1, and a pedal lower arm 3 mounted on the pedal upper arm 2, and the pedal lower arm 3 has a pedal portion and is fixed on the pedal upper arm 2 by using a fastener 4, where multiple mounting holes 5 are spaced along an up-and-down direction on the pedal upper arm 2, and a connecting hole 6 of the pedal lower arm 3 and one mounting hole 5 among the mounting holes 5 are aligned, and connected and fixed by using the fastener 4.

That is, as shown in FIG. 2 to FIG. 4, after the connecting hole 6 of the pedal lower arm 3 and one mounting hole 5 among the multiple mounting holes 5 provided on the pedal upper arm 2 are aligned, the connecting hole 6 and the mounting hole 5 are connected and fixed by using the fastener 4, thereby being adjusted to operating positions comfortable for human bodies in different percentages, and improving the comfort of operations for human bodies in different percentages. Here, connecting holes 6 of the same quantity as that of the mounting holes 5 may be provided on positions, corresponding to positions of the mounting holes 5, of the pedal lower arm 3, and one connecting hole 6 may also be provided, but the present invention is not limited thereto, and can be in any form as needed.

Preferably, three mounting holes 5 are spaced along the up-and-down direction on the pedal upper arm 2, and the connecting hole 6 of the pedal lower arm 3 and one mounting hole 5 among the mounting holes 5 are aligned, and connected and fixed by using the fastener 4. As shown in FIG. 2, an operator may select one mounting hole among the three mounting holes 5 according to a condition of the operator. After the mounting hole and the connecting hole 6 of the pedal lower arm 3 are aligned, the mounting hole and the connecting hole 6 are connected and fixed by using the fastener 4, so that the operator can operate stably under a comfortable condition. Here, the three mounting holes 5 may separately satisfy the comfort of operations for 95% of male bodies, 50% of male bodies, and 5% of female bodies. However, the present invention is not limited thereto, and multiple mounting holes 5 may be provided as needed.

Preferably, the fastener 4 includes a bolt. The bolt fixes the pedal upper arm 2 to the pedal lower arm 3 by means of threaded connection between the mounting hole 5 and the connecting hole 6, so that the operator can stably operate. However, the present invention is not limited thereto, and as long as the pedal upper arm 2 and the pedal lower arm 3 can be connected and fixed stably, the fastener 4 may also be of any connecting structure.

Preferably, a nut is fixed on a position, corresponding to each of the mounting holes 5, of the pedal lower arm 3, so as to threadedly cooperate with the bolt. However, the present invention is not limited thereto, and a single nut may also be used to threadedly cooperate with the bolt. However, in order to facilitate mounting and dismounting and improve the mounting efficiency, preferably, a nut is fixed on a position, corresponding to each of the mounting holes 5, of the pedal lower arm 3.

Preferably, the pedal portion is a pedal 7 disposed at a lower end of the pedal lower arm 3. The operator performs a braking operation by using the pedal 7.

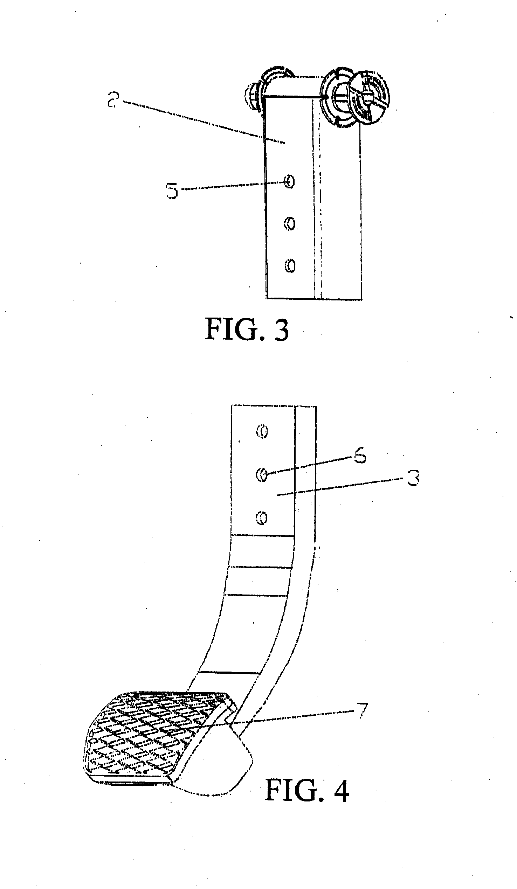

Further, preferably, the pedal lower arm 3 has a groove-shaped cross section, and the pedal lower arm 3 is sleeved on the pedal upper arm 2 by using a groove on the pedal lower arm 3, so that the pedal lower arm 3 and the pedal upper arm 2 are connected and fixed by using the fastener 4. That is, as shown in FIG. 2 and FIG. 4, after the connecting hole 6 of the pedal lower arm 3 is sleeved on the pedal upper arm 2 by using a groove structure of the pedal lower arm 3, and is aligned with one mounting hole 5 of the pedal upper arm 2, the connecting hole 6 and the mounting hole 5 are fixed by using the fastener 4. However, the present invention is not limited thereto, and the pedal lower arm 3 may also be of another structure.

In addition, according to another aspect of the present invention, a vehicle is further provided, where the vehicle includes the brake pedal described above, the fixed support 1 is fixed to a front portion of the vehicle, and the pedal upper arm 2 is connected to a drive member of a braking system. After the operator makes the connecting hole 6 of the pedal lower arm 3 aligned with one of the mounting holes 5 of the pedal upper arm 2 according to the comfort of the operator, and then connects and fixes the connecting hole 6 to the mounting hole 5 by using the fastener 4, the operator makes, by depressing the pedal 7 of the pedal lower arm 3, the pedal upper arm 2 hinged on the fixed support 1 rotate to drive the drive member connected to the pedal upper arm 2 to perform the braking operation.

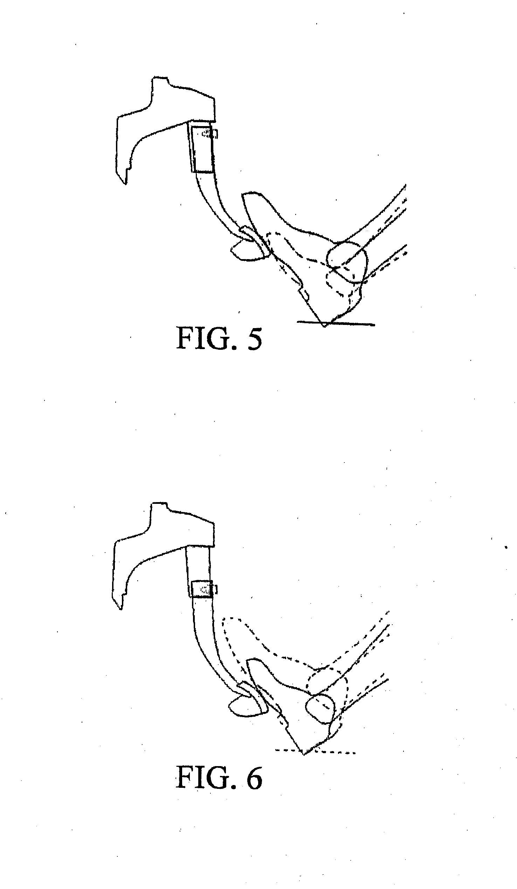

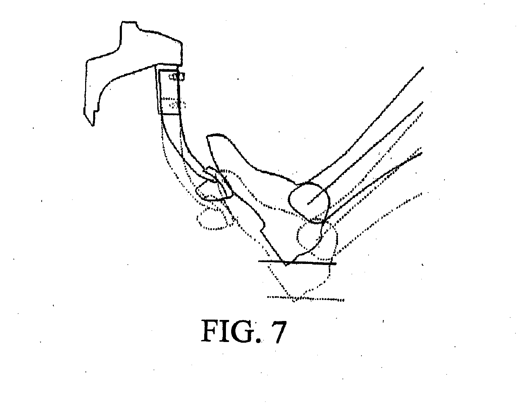

For example, as shown in FIG. 3, in a case that the pedal upper arm 2 is provided with the three mounting holes 5, a usage state of the 95% of male bodies and the 5% of female bodies is used as an example. When the 95% of male bodies use the brake pedal, as shown in FIG. 5, (a solid line indicates the 95% of male bodies and a dotted line indicates the 5% of female bodies), they may make the connecting hole 6 of the pedal lower arm 3 aligned with a first mounting hole 5 relative to the top of the pedal upper arm 2 to connect and fix the connecting hole 6 and the first mounting hole 5, so as to operate the brake pedal of the present invention. When the 5% of female bodies use the brake pedal, as shown in FIG. 6, (a solid line indicates the 5% of female bodies and a dotted line indicates the 95% of male bodies), they may make the connecting hole 6 of the pedal lower arm 3 aligned with a third mounting hole 5 relative to the top of the pedal upper arm 2 to connect and fix the connecting hole 6 and the third mounting hole 5. However, the present invention is not limited thereto, and a positional relationship between the pedal upper arm 2 and the pedal lower arm 3 may be adjusted by using the bolt according to the comfort of the operator. In addition, the brake pedal of the present invention may also be mounted on braking systems of different vehicle models. As shown in FIG. 7, a solid line and a dotted line indicate positional relationships between human bodies in the same percentage and the brake pedal when the brake pedal is applied to different vehicle models. When the brake pedal is mounted to two different vehicle models, a height of the pedal 7 may be adjusted by using the bolt to adjust a positional relationship between the pedal upper arm 2 and the pedal lower arm 3, thereby improving the comfort of operations for the operator.

According to the brake pedal of the present invention, multiple mounting holes 5 are spaced along an up-and-down direction on a pedal upper arm 2, to adjust a position of a pedal 7 of a pedal lower arm 3 to suit human bodies in different percentages, which not only can improve the comfort of operations of human bodies in different percentages, but also can improve the universality of components, so that the brake pedal is applicable to different vehicle models. In addition, the present invention further has effects such as being simple in structure, convenient for processing, and easy to implement.

Preferable implementation manners of the present invention are described above in detail with reference to the accompanying drawings, but the present invention is not limited by specific details of the foregoing implementation manners. Within the scope of the technical thought of the present invention, multiple simple variations can be made to the technical solutions of the present invention, and all these simple variations shall fall within the protection scope of the present invention.

In addition, it should be noted that the specific technical features described in the foregoing specific implementation manners may be combined in any suitable manner without any conflict. In order to avoid unnecessary repetition, the present invention does not describe possible combination manners further.

In addition, different implementation manners of the present invention may be arbitrarily combined, which shall also be regarded as the disclosure of the present invention as long as not departing from the thought of the present invention.

## Claims

1. A brake pedal, wherein the brake pedal comprises a fixed support (1), a pedal upper arm (2) hinged on the fixed support (1), and a pedal lower arm (3) mounted on the pedal upper arm (2), and the pedal lower arm (3) has a pedal portion and is fixed on the pedal upper arm (2) by using a fastener (4), wherein multiple mounting holes (5) are spaced along an up-and-down direction on the pedal upper arm (2), and a connecting hole (6) of the pedal lower arm (3) and one mounting hole (5) among the mounting holes (5) are aligned, and connected and fixed by using the fastener (4).

2. The brake pedal according to claim 1, wherein three mounting holes (5) are spaced along the up-and-down direction on the pedal upper arm (2), and the connecting hole (6) of the pedal lower arm (3) and one mounting hole (5) among the mounting holes (5) are aligned, and connected and fixed by using the fastener (4).

3. The brake pedal according to claim 1, wherein the fastener (4) comprises a bolt.

4. The brake pedal according to claim 3, wherein a nut is fixed on a position, corresponding to each of the mounting holes (5), of the pedal lower arm (3), so as to threadedly cooperate with the bolt.

5. The brake pedal according to claim 1, wherein the pedal portion is a pedal (7) disposed at a lower end of the pedal lower arm (3).

6. The brake pedal according to any one of claims 1 to 5, wherein the pedal arm (3) has a groove-shaped cross section, and the pedal lower arm (3) is sleeved on the pedal upper arm (2) by using a groove on the pedal lower arm (3), so that the pedal lower arm (3) and the pedal upper arm (2) are connected and fixed by using the fastener (4).

7. A vehicle, wherein the vehicle comprises the brake pedal according to any one of claims 1 to 6, the fixed support (1) is fixed to a front portion of the vehicle, and the pedal upper arm (2) is connected to a drive member of a braking system.
